# EUROPEAN PATENT APPLICATION

(11) **EP 3 760 538 A1**
(43) Date of publication of application: **06.01.2021**
(21) Application number: 20178677.9
(22) Date of filing: 08.06.2020
(51) Int. Cl.: B64C 27/08, B64C 39/02

(54) **AUTONOMOUS MULTI-ROTOR AIRPLANE**

(30) Priority: 01.07.2019 DK PA201900797
(71) Applicant: Broelstaerk ApS, 8520 Lystrup (DK)
(72) Inventor: Fredsted, Thomas Vestergaard, 8520 Lystrup (DK)
(74) Representative: Sun, Yiming

(57) **Abstract**

An autonomous multi-rotor airplane (100) comprises a body frame (102) with a chamber (103). The chamber (103) is configured to provide space for one or more skydivers or jumpers (106), a lifting platform (108) having an onboard computer and an avionic system. The airplane (100) comprises one or more propulsion systems (112) operably coupled to the lifting platform (100). The airplane (100) is configured to find and execute the optimal flight path based on given information by the operator. The airplane comprises one or more user interfaces securely positioned inside the chamber. The user interfaces are configured to enable the skydiver to view the location and the optimal flight path, and adjust the angle of the autonomous multi-rotor airplane against the wind direction. The user interface is configured to enable the skydiver to operate and land the autonomous multi-rotor airplane at a landing zone.

## Description

### CROSS-REFERENCE TO RELATED APPLICATION

This application claims priority to Danish Patent Application No. 201900797, titled "AUTONOMOUS MULTI-ROTOR AIRPLANE" filed on July 01, 2019. The specification of the above referenced patent application is incorporated herein by reference in its entirety.

### BACKGROUND OF THE INVENTION

### A. Technical field

The invention disclosed herein generally relates to a multi-rotor airplane. More particularly, the present invention relates to an autonomous multi-rotor airplane used for skydiving.

### B. Description of related art

Skydiving or parachute jump is a stimulating pleasurable sport activity and extremely popular around the world. Generally, skydivers or jumpers are reached to a desired high altitude by an airplane or aircraft and jump from the high altitude to get maximum flying time. Skydive airplanes or jump planes are used to pick up and carry a number of skydivers or jumpers from different locations to the desired high altitude for skydiving or parachute jump.

Currently, the skydive airplanes or jump planes are incorporated with a single turbo engine or dual/twin turbo engines. The skydive planes are capable of taking at least 10-15 skydivers simultaneously to the high altitude, for example, 3,000 to 15,000 feet in about 10 to 20 mins. The skydivers or jumpers could jump from an exit door of the skydive planes from the high altitude. However, the existing skydive planes are difficult to operate and control by one or more pilots or operators in bad weathers. This difficulty arises from the decrease in the situational awareness of the operator, which in turn, significantly decreases working efficiency and at the same time increases risks. The existing skydive planes are very expensive to operate and maintenance due to low efficiency. Further, the existing skydive planes are not comfortable for picking and dropping the new and experienced skydivers at different locations. In addition, the existing autonomous airplanes are used for different purposes, for example, transporting goods. The autonomous airplanes may be remotely controlled or self-controlled by remote or onboard computers.

The skydive airplanes or jump planes carry excess fuel above the minimum needed to compensate delays for each flight. The amount of fuel burned by an aircraft during a flight depends on many factors that range from the age and type of aircraft to the specific flight plan approved by air traffic control and any excess fuel required to be carried. The burning of liquid hydrocarbon fuels releases greenhouse gases such as carbon dioxide (CO₂) and methane into the atmosphere and causes global warming.

A prior art, WO 2017/173159 A1 of Russell David Wayne discloses Unmanned Aerial Vehicles also known as UAVs or Drones, either autonomous or remotely piloted, are classified as drones by the US Federal Aviation Administration (FAA) as weighing under 212 pounds. The system described herein details Autonomous Flight Vehicles (AFV) which weigh over 212 pounds but less than 1,320 pounds which may require either a new classification or a classification such as Sport Light Aircraft, but without the requirement of a pilot due to the safe autonomous flight system such as the Safe Temporal Vector Integration Engine. Another prior art, US 2019/0106206 A1 of Shi Xichen et al.*,* discloses an automated flying transport vehicle that capitalizes on the strengths and complexities of a fixed and rotary winged aircraft. The air transport vehicle comprises a body aerodynamically designed to generate lift and a plurality of rotors that can generate lift as well as forward thrust from which a fixed wing portion of the air transport vehicle will begin to generate additional lift allowing for a sustained flight.

Further, in another prior art, WO 2018/122821 A2 of Alshdaifat Wasfi, discloses a City Autonomous Airport (CAA) and means to handle autonomously booking of Aero-cars aerial containers reception and parcels delivery according to a specific selected root managed via GPS and controlled path programs. The CAA consists of: Terminal 1 to manage passenger's flights via multiple types of Aero-cars through a landing or take-off yards or elevator terminal, and handling aerial containers in the same. Terminal 2 handles the reception of the dropped containers from remotely controlled aircrafts toward elevator inlets to be distributed by pick-up drones to shelves and autonomous ground stations in multiple floors, and handled as aerial parcel sets to delivery drones on top of elevator ends. Terminal 3 is a yard type handling of containers and distributing their parcels content via UAVs. *However,* above-mentioned prior arts fail to provide optimal and safe solution for a skydiver or jumper using the autonomous multi-rotor airplane with an user interface enabling the skydiver to view the location and the optimal flight path, and adjust the angle of the autonomous multi-rotor airplane against the wind direction, thereby flying to desired altitudes with the skydivers for a freefall using a parachute via an optimal flight path based on a control input given by an operator via an onboard computer positioned in a lifting platform of the autonomous multi-rotor airplane.

In the light of above-mentioned problems, it is need to provide a multi-rotor autonomous airplane for skydivers or jumpers that executes an optimal flight path based on the information, such as, wind direction, wind speed, and the desired altitude, given by the operator who is in direct contact with the flight controllers. There is also a need to provide a multi-rotor autonomous airplane, capable of picking and carrying one or more skydivers at a time to the desired high altitude within few minutes. Further, there is also a need to provide an environment-friendly multi-rotor autonomous airplane to safely pick up and comfortably drop the skydivers or jumpers at different locations and altitudes.

### SUMMARY OF THE INVENTION

The present invention generally discloses a multi-rotor airplane. Further, the present invention discloses to an autonomous multi-rotor airplane used for skydiving.

The present invention discloses an autonomous multi-rotor airplane for skydiving. An autonomous multi-rotor airplane comprises a body frame with a chamber. The chamber is configured to provide space for one or more skydivers or jumpers, a lifting platform having an onboard computer and an avionic system. The lifting platform is configured to securely affixed to a top portion of the body frame via a plurality of supporters. The autonomous multi-rotor airplane comprises one or more propulsion systems operably coupled to the lifting platform via a plurality of supporting arms. The propulsion systems are configured to lift the autonomous multi-rotor airplane, thereby flying and climbing to desired altitudes with the skydivers for a freefall using a parachute via an optimal flight path based on a control input given by an operator via the onboard computer positioned in the lifting platform. The airplane is configured to find and execute the optimal flight path based on given information by the operator. The information includes wind direction, wind speed, and desired altitudes, confirmation of take-off position and landing position, and confirmation of the skydiver's exit point/drop zone and desired landing position. The autonomous multi-rotor airplane comprises one or more user interfaces securely positioned inside the chamber of the body frame, wherein the user interfaces are configured to enable the skydiver to view the location and the optimal flight path, and adjust the angle of the autonomous multi-rotor airplane against the wind direction, and wherein the user interface is at least any one of a display and control buttons, are further configured to enable the skydiver to operate and land the autonomous multi-rotor airplane at a landing zone.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

### BRIEF DESCRIPTION OF DRAWINGS

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.
**FIG. 1** exemplarily illustrates a perspective view of an autonomous multi-rotor airplane used to fly skydivers in an embodiment of the present invention.
**FIG. 2** exemplarily illustrates an exploded view of the autonomous multi-rotor airplane in an embodiment of the present invention.

### DETAILED DESCRIPTION OF EMBODIMENTS

A description of embodiments of the present invention will now be given with reference to the Figures. It is expected that the present invention may be embodied in other specific forms without departing from its spirit or essential characteristics. The described embodiments are to be considered in all respects only as illustrative and not restrictive.

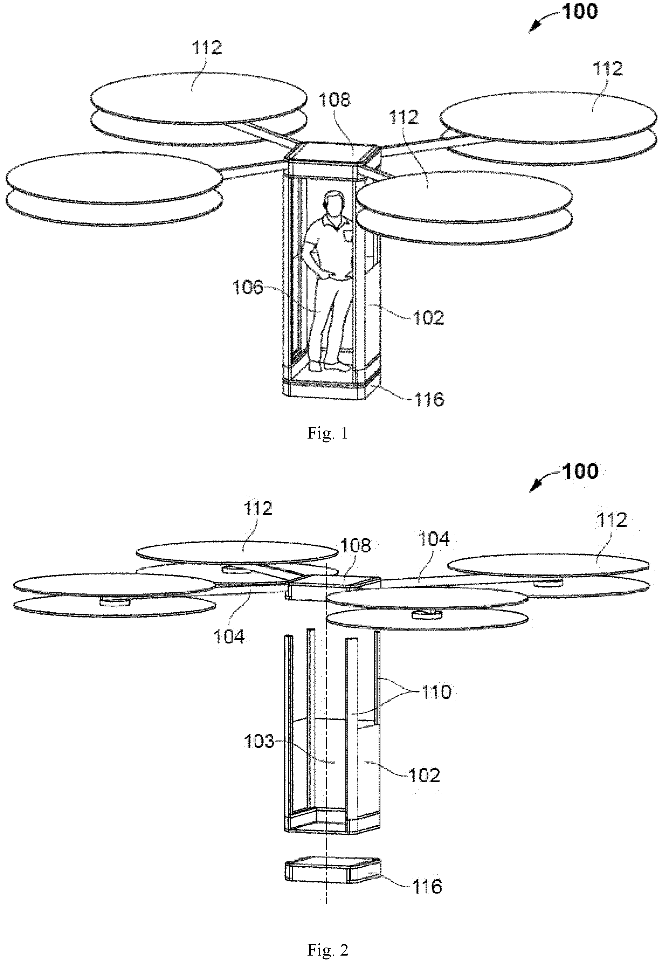

Referring to **FIG. 1**, an autonomous multi-rotor airplane **100** used by a skydiver **106** for a freefall is disclosed. In one embodiment, the multi-rotor airplane **100** is configured to fly and climb to one or more desired altitudes with one or more skydivers or jumpers **106** for a freefall. In one embodiment, the multi-rotor airplane **100** is further configured to find and execute an optimal flight path based on given information by an operator. The multi-rotor airplane **100** is pre-programmed to fly and climb to the desired altitudes in the optimal flight path and land at a landing zone. The information includes, but not limited to, altitude, wind direction, wind speed, confirmation of take-off position and landing position, and confirmation of the skydiver's exit point/drop zone and desired landing position. The skydiver's exit point will be offset linearly to the landing point due to wind speed and wind direction. The wind speed and direction are must be taken into consideration in order to land in the designated landing area or drop zone. When the multi-rotor airplane **100** reached to the drop zone/point, the skydivers **106** could jump or leap from the multi-rotor airplane **100** for a freefall and land safely on the ground using a parachute and the multi-rotor airplane **100** could safely land at the landing zone. In one embodiment, the multi-rotor airplane **100** comprises a body frame **102**, a lifting platform **108**, one or more propulsion systems **112**, and an onboard power system **116.** In one embodiment, the lifting platform **108** is configured to securely affixed to the body frame **102** via a plurality of supporters **110.**

Referring to **FIG. 2**, the autonomous multi-rotor airplane **100** is disclosed. In one embodiment, the multi-rotor airplane **100** comprises a body frame **102.** The body frame **102** includes a chamber **103.** In one embodiment, the chamber **103** is configured to provide space for one or more skydivers or jumpers **106** (shown in **FIG. 1**). The skydiver **106** could sit and/or stand in the chamber **103** and comfortably and safely leap from the multi-rotor airplane **100** for a freefall using a parachute. In one embodiment, the multi-rotor airplane **100** further comprises a lifting platform **108.** The lifting platform **108** includes an onboard computer and an avionic system. In one embodiment, the onboard computer could be a flight controller. In one embodiment, the lifting platform **108** is configured to securely affixed to a top portion of the body frame **102** via a plurality of supporters **110.** In one embodiment, the multi-rotor airplane **100** further comprises one or more propulsion systems **112.** The propulsion systems **112** are operably coupled to the lifting platform **108** via a plurality of supporting arms **104.** The propulsion systems **112** are configured to lift the multi-rotor airplane **100**, thereby flying and climbing one or more desired altitudes with the skydivers for a freefall via the optimal flight path based on a control input given by an operator via the onboard computer positioned in the lifting platform **108.** In one embodiment, the operator could send the control inputs to the onboard computer positioned in the lifting platform **108** using a remote computing device.

In one embodiment, the plurality of arms **104** could be radially and securely affixed to the lifting platform **102** of the multi-rotor airplane **100.** In one embodiment, each propulsion system **112** comprises a propulsion motor with a rotor and a propeller. The propeller is rotatably affixed to the rotor of the propulsion motor. In one embodiment, each propulsion system **112** is further configured to apply thrust during operation in any direction. The onboard computer positioned in the lifting platform **108** is configured to control the operation of the multi-rotor airplane **100.** In one embodiment, the onboard computer is further configured to measure the orientation of the autonomous multi-rotor airplane **100** and make adjustments according to the desired orientation.

In one embodiment, one or more user interfaces are securely positioned inside the chamber **103** of the body frame **102.** The user interfaces are configured to enable the skydiver **106** to view the location and the optimal flight path. The user interfaces are further configured to enable the skydiver **106** to adjust the angle of the multi-rotor airplane **100** against the wind direction to reach the correct angle while leaping or jumping from the chamber **103** for a freefall using a parachute. The skydiver **106** could operate and land the multi-rotor airplane **100** at the landing zone using the user interfaces. In one embodiment, the user interface could be, but not limited to, a display and control buttons/levers. In one embodiment, the operator or ground crew could also operate and control, for example, take-off, landing, or adjusting the direction of the multi-rotor airplane **100** against the wind direction, using the remote computing device.

In one embodiment, the multi-rotor airplane **100** further comprises an onboard power system **116.** The onboard power system **116** is securely affixed to a bottom portion of the body frame **102.** The onboard power system **116** is configured to supply power to the lifting platform **108** and the one or more propulsion systems **112** using cables. In one embodiment, the onboard power system **116** comprises, but not limited to, a plurality of batteries. The onboard power system **116** is further configured to provide a lowest gravity point and stability for the multi-rotor airplane **100** during landing.

In one embodiment, the multi-rotor airplane **100** could require a small space on the ground for landing and takeoff with the skydivers **106.** The multi-rotor airplane **100** could fly and climb within the regulated air space to reach the drop zones. The operator could effectively operate and control, for example, landing and/or take-off the multi-rotor airplane **100** by giving the control inputs to the onboard computer or a flight controller using a remote computing device. In one embodiment, the multi-rotor airplane **100** further comprises a global positioning system (GPS) module and a built-in gyroscope. The GPS module is configured to the geolocation of the multi-rotor airplane **100** and allows the onboard computer to follow the optimal flight plan. In one embodiment, the built-in gyroscope is configured to adjust the speed of the one or more propulsion systems **112** which always keeps in a horizontal position. The navigation on three axes occurs by adjusting the speed of the rotors of the propulsion motors, individually. The airplane's methodology is mostly reminiscent to modern drones that typically have, but not limited to, between 4 and 8 rotors with individual propulsion system/engines **112.** In one embodiment, the multi-rotor airplane **100** is further configured to receive the control inputs from the operator during flying or climbing to the desired high altitudes. The skydiver or jumper **106** could adjust the directions of the multi-rotor airplane **100** using the user interface positioned inside the chamber **103** when the wind direction is different than expected.

The advantages of the present invention include, the skydiver or jumper **106** could comfortably and safely jump or leap from the multi-rotor airplane **100** for a freefall using a parachute. The multi-rotor airplane **100** is environment-friendly and requires less space for landing and take-off from the ground. The multi-rotor airplane **100** reduces the dependency on the staff or crew members at the drop zone and creates greater operational flexibility. The multi-rotor airplane **100** provides safety and comfort for the skydivers **106** and prevents serious injuries while jumping from the multi-rotor airplane **100.**

Preferred embodiments of this invention are described herein, including the best mode known to the inventors for carrying out the invention. It should be understood that the illustrated embodiments are exemplary only and should not be taken as limiting the scope of the invention.

The foregoing description comprise illustrative embodiments of the present invention. Having thus described exemplary embodiments of the present invention, it should be noted by those skilled in the art that the within disclosures are exemplary only, and that various other alternatives, adaptations, and modifications may be made within the scope of the present invention. Merely listing or numbering the steps of a method in a certain order does not constitute any limitation on the order of the steps of that method. Many modifications and other embodiments of the invention will come to mind to one skilled in the art to which this invention pertains having the benefit of the teachings in the foregoing descriptions. Although specific terms may be employed herein, they are used only in generic and descriptive sense and not for purposes of limitation. Accordingly, the present invention is not limited to the specific embodiments illustrated herein.

## Claims

1. An autonomous multi-rotor airplane comprising a body frame having a chamber, wherein the chamber is configured to provide space for one or more skydivers or jumpers, a lifting platform having an onboard computer and an avionic system, wherein the lifting platform is configured to securely affixed to a top portion of the body frame via a plurality of supporters, and one or more propulsion systems operably coupled to the lifting platform via a plurality of supporting arms, wherein the propulsion systems are configured to lift the autonomous multi-rotor airplane, thereby flying and climbing to desired altitudes with the skydivers for a freefall using a parachute via an optimal flight path based on a control input given by an operator via the onboard computer positioned in the lifting platform, **characterized by**:
the airplane is configured to find and execute the optimal flight path based on given information by the operator, wherein the information includes wind direction, wind speed, and desired altitudes, confirmation of take-off position and landing position, and confirmation of the skydiver's exit point/drop zone and desired landing position, and
one or more user interfaces securely positioned inside the chamber of the body frame, wherein the user interfaces are configured to enable the skydiver to view the location and the optimal flight path, and adjust the angle of the autonomous multi-rotor airplane against the wind direction, and
wherein the user interface is at least any one of a display and control buttons, are further configured to enable the skydiver to operate and land the autonomous multi-rotor airplane at a landing zone.

2. The multi-rotor airplane of claim 1, wherein the plurality of supporting arms are radially and securely affixed to the lifting platform of the autonomous multi-rotor airplane.

3. The multi-rotor airplane of claim 1, wherein each propulsion system comprises a propulsion motor with a rotor and a propeller, wherein said propeller is rotatably affixed to the rotor of the propulsion motor.

4. The multi-rotor airplane of claim 1, further comprises an onboard power system securely positioned at a bottom portion of the body frame, wherein the onboard power system is configured to supply power to the lifting platform and the one or more propulsion systems.

5. The multi-rotor airplane of claim 1, is configured to fly and climb to desired altitudes via the optimal flight path based on the control input given by the operator using a remote computing device via the onboard computer positioned in the lifting platform.

6. The multi-rotor airplane of claim 1, wherein the onboard computer positioned in the lifting platform is configured to control the operation and measure the orientation of the autonomous multi-rotor airplane and make adjustments according to the desired orientation.
